# EUROPÄISCHE PATENTSCHRIFT

(11) **EP 1 331 406 B1**
(45) Veröffentlichungstag und Bekanntmachung des Hinweises auf die Patenterteilung: **27.04.2005**
(21) Anmeldenummer: 02028371.9
(22) Anmeldetag: 18.12.2002
(51) Int. Cl.: F16B 13/14

(54) **Ankerhülse**
Anchor sleeve
Douille d'ancrage

(30) Priorität: 25.01.2002 DE 10202821
(43) Veröffentlichungstag der Anmeldung: 30.07.2003
(73) Patentinhaber: fischerwerke Artur Fischer GmbH & Co. KG, 72178 Waldachtal (DE)
(72) Erfinder: Assadi, Amir, 79312 Emmendingen (DE); Jakob, Rainer, 79110 Freiburg (DE)

(56) Entgegenhaltungen:
- DE-U- 29 803 927
- DE-U- 29 906 189
- GB-A- 1 405 083

## Beschreibung

Die Erfindung betrifft eine Ankerhülse zur Verankerung einer Ankerstange in einem Bohrloch mittels Mörtel mit den Merkmalen des Oberbegriffs des Anspruchs 1 (DE 298 03 927 U).

Derartige Ankerhülsen sind an sich bekannt. Sie sind vielfach als sog. Siebhülsen ausgebildet, d. h. ihre Umfangswandung ist siebartig mit einer Vielzahl von Löchern ausgebildet, die Austrittsöffnungen für Mörtel bilden. Die Löcher können gleichmäßig oder ungleichmäßig verteilt angeordnet sein. Die Ankerhülsen können beispielsweise aus Kunststoff oder aus Metall bestehen. Auch sind derartige Ankerhülsen bekannt, die über ihre gesamte Länge mit einer Art Strumpf überzogen sind, der eine aufweitbare Umhüllung bildet.

Zur Verankerung einer Ankerstange wird zunächst die Ankerhülse in ein Bohrloch eingesetzt, es wird Mörtel in die Ankerhülse injiziert und die Ankerstange in die Ankerhülse eingeführt. Als Mörtel wird üblicherweise Kunstharzmörtel verwendet. Beim Injizieren des Mörtels und/oder beim Einführen der Ankerstange tritt Mörtel durch die Austrittsöffnungen aus der Ankerhülse aus und verankert diese und die eingeführte Ankerstange im Bohrloch. Es tritt allerdings das Problem auf, dass durch das Injizieren des Mörtels und/oder durch das Einführen der Ankerstange der Mörtel im Wesentlichen in einen vorderen Bereich der Ankerhülse verbracht wird und dort austritt. Dabei ist mit vorderem Bereich ein Längsabschnitt der Ankerhülse gemeint, der sich an ein vorderes Ende oder Einführende der Ankerhülse anschließt, mit dem voran die Ankerhülse in das Bohrloch eingesetzt wird. Ein hinteres Ende der Ankerhülse befindet sich demnach an einer Mündung des Bohrlochs, ein hinterer Bereich der Ankerhülse schließt sich an das hintere Ende der Ankerhülse an. Durch das hintere Ende wird die Ankerstange in die Ankerhülse eingeführt. Im hinteren Bereich der Ankerhülse befindet sich wenig Mörtel, die Verankerung ist deswegen im hinteren Bereich der Ankerhülse schlecht. Ebenfalls ist eine Querabstützung der Ankerstange im hinteren Bereich der Ankerhülse schlecht. Das Problem des Verbringens des Mörtels in den vorderen Bereich der Ankerhülse ist besonders in Hohlbaustoffen wie beispielsweise Lochsteinen gegeben, in denen der Mörtel im vorderen Bereich der Ankerhülse in einen Hohlraum austritt und nicht von einer Bohrlochwandung zurückgehalten wird.

Der Erfindung liegt die Aufgabe zugrunde, eine Ankerhülse der vorstehend erläuterten Art vorzuschlagen, die eine Verankerung einer Ankerstange insbesondere in Hohlbaustoffen verbessert.

Diese Aufgabe wird erfindungsgemäß durch die Merkmale des Anspruchs 1 gelöst. Erfindungsgemäß ist die aufweitbare Umhüllung nur auf einem Teil einer Länge der Ankerhülse vorgesehen. Die Umhüllung verringert den Austritt von Mörtel in dem Bereich der Ankerhülse, in dem die Umhüllung vorgesehen ist, wodurch sich der Mörtelaustritt im übrigen Bereich der Ankerhülse vergrößert. Des Weiteren drückt die Umhüllung in ihrem Bereich aus der Ankerhülse ausgetretenen Mörtel zurück in die Ankerhülse, wodurch sich eine bessere Verteilung des Mörtels innerhalb der Ankerhülse über die gesamte Länge der Ankerhülse ergibt und ein gleichmäßigerer Austritt von Mörtel über die gesamte Länge der Ankerhülse erreichbar ist. Die Verteilung des Mörtels innerhalb und außerhalb der Ankerhülse lässt sich durch die nur über einen Teil der Länge der Ankerhülse vorhandene Umhüllung gezielt beeinflussen. Durch die verbesserte Verteilung des Mörtels über die Länge der Ankerhülse sowohl innerhalb als auch außerhalb der Ankerhülse wird die Verankerung und eine Querabstützung der Ankerstange in einem Bohrloch verbessert. In einem Lochstein wird erreicht, dass die Ankerstange nicht nur im Bereich eines Stegs des Lochsteins am vorderen Ende der Ankerhülse, sondern an allen Stegen, die von der Ankerhülse durchdrungen werden, verankert wird. Insbesondere wird die Ankerstange auch im Bereich eines Stegs am hinteren Ende der Ankerhülse verankert und in seitlicher Richtung abgestützt. Versuche haben über 2,5-fach erhöhte Verankerungslasten (Bruchlast bei Zugbeanspruchung) der Ankerstange in Kalksandlochsteinen gegenüber Ankerhülsen ohne Umhüllung ergeben.

Eine Ausgestaltung der Erfindung sieht eine aufweitbare Umhüllung der Ankerhülse nur in deren vorderem Bereich, beispielsweise in ihrer vorderen Hälfte, vor. Die Umhüllung verringert den Austritt von Mörtel im vorderen Bereich der Ankerhülse insbesondere wenn sich der vordere Bereich der Ankerhülse in einem oder mehreren Hohlräumen befindet. Dadurch wird eine Verteilung des Mörtels innerhalb der Ankerhülse in den hinteren Bereich und ein Austritt des Mörtels auch im hinteren Bereich der Ankerhülse erzielt.

Eine andere Ausgestaltung der Erfindung sieht die aufweitbare Umhüllung nur im hinteren Bereich der Ankerhülse, beispielsweise ungefähr in einer hinteren Hälfte der Ankerhülse vor. Vorzugsweise weist diese Ausgestaltung der Erfindung zusätzlich eine Mörtelbremse an einer Innenseite der Ankerhülse auf. Die Mörtelbremse kann beispielsweise ein umlaufender, nach innen stehender Wulst oder dgl. sein. Der Mörtel staut sich an der Mörtelbremse, wodurch ein Teil des Mörtels im hinteren Bereich der Ankerhülse zurückgehalten wird und Mörtel sowohl im hinteren als auch im vorderen Bereich der Ankerhülse austritt. Auch wenn die Mörtelbremse an der Innenseite der Ankerhülse vorzugsweise gemeinsam mit der im hinteren Bereich der Ankerhülse angeordneten Umhüllung vorgesehen ist, kann die Mörtelbremse auch in einer Ankerhülse vorgesehen sein, die die Umhüllung in ihrem vorderen Bereich aufweist. Auch ist es möglich, die Mörtelbremse in einer Ankerhülse ohne Umhüllung vorzusehen.

Im Bereich der Umhüllung braucht die Ankerhülse nicht siebartig ausgebildet zu sein, es sind im Bereich der Umhüllung auch eine oder wenige großflächige Austrittsöffnungen denkbar.

Das vordere Ende der Ankerhülse ist vorzugsweise geschlossen ausgebildet, um einen Austritt von Mörtel an dieser Stelle zu vermeiden.

Die Umhüllung kann mörteldurchlässig, also beispielsweise als eine Art Strumpf ausgebildet sein. Auch ist es möglich, die Umhüllung mörteldicht nach Art eines aufweitbaren Schlauchs auszuführen. Vorzugsweise ist die Umhüllung elastisch aufweitbar, damit sie einen Teil des ausgetretenen Mörtels wieder in die Ankerhülse zurückdrückt. Die Verteilung des Mörtels wird dadurch verbessert.

Die Erfindung wird nachfolgend anhand zweier in der Zeichnung dargestellter Ausführungsbeispiele näher erläutert. Es zeigen:
- Figur 1: eine Seitenansicht einer erfindungsgemäßen Ankerhülse teilweise geschnitten; und
- Figur 2: ein zweites Ausführungsbeispiel einer erfindungsgemäßen Ankerhülse in einer Figur 1 entsprechenden Darstellung.

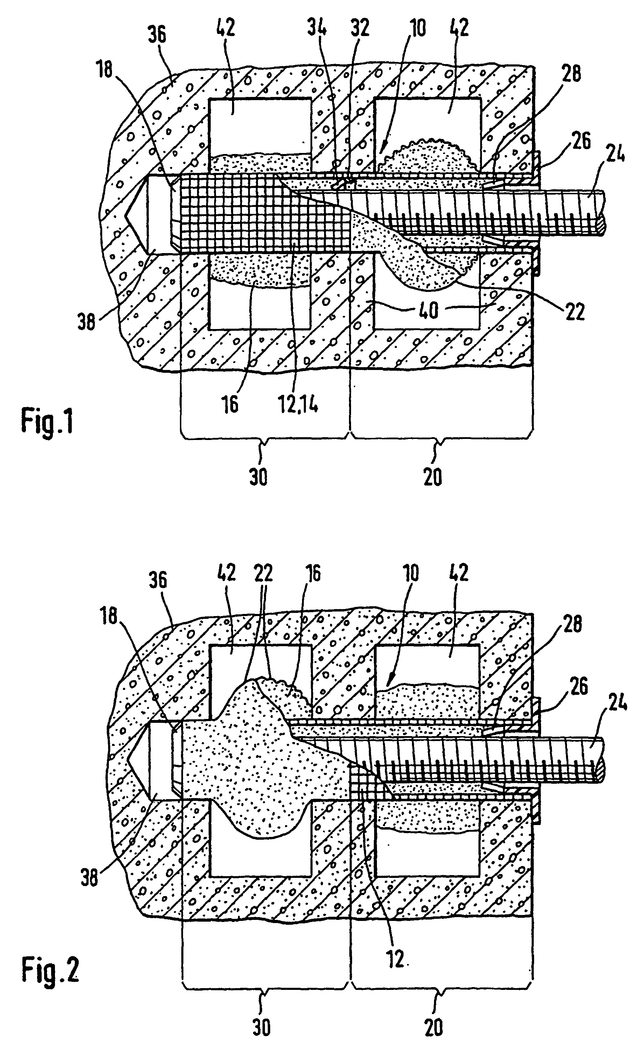

Die in Figur 1 dargestellte, erfindungsgemäße Ankerhülse 10 ist als Siebhülse ausgebildet, ihre Umfangswandung weist ein rohrförmiges Metallsiebgitter 12 auf, das sich über die gesamte Länge der Ankerhülse 10 erstreckt. Anstelle eines Metallsiebs kann die Ankerhülse 10 beispielsweise auch eine Siebhülse aus Kunststoff aufweisen oder mit sonstigen Öffnungen am Umfang versehen sein. Löcher des Metallsiebs 12 bilden Austrittsöffnungen 14 für Mörtel 16. Ein vorderes Ende der Ankerhülse 10 ist mit einer Kappe 18 verschlossen. Das vordere Ende der Ankerhülse 10 ist das Ende, mit dem voran die Ankerhülse 10 in ein Bohrloch eingebracht wird.

In einem hinteren Bereich 20 ist eine elastisch aufweitbare Umhüllung 22 auf die Ankerhülse 10 aufgezogen, die an ihren beiden Enden mit der Ankerhülse 10 beispielsweise durch Kleben verbunden ist. Die Umhüllung 22 ist im dargestellten und beschriebenen Ausführungsbeispiel der Erfindung ein schlauchförmiger Textilstumpf. Der hintere Bereich 20, in dem sich die Umhüllung 22 befindet, nimmt im dargestellten und beschriebenen Ausführungsbeispiel der Erfindung ungefähr die Hälfte der Länge der Ankerhülse 10 ein. Der hintere Bereich 20 schließt sich an ein hinteres Ende der Ankerhülse 10 an, wobei das hintere Ende das Ende der Ankerhülse 10 ist, welches bei in ein Bohrloch eingesetzter Ankerhülse 10 zugänglich und durch das eine Ankerstange 24 in die Ankerhülse 10 einführbar ist. In das hintere Ende der Ankerhülse 10 ist ein Kunststoffring 26 mit L-förmigem Ringquerschnitt eingesetzt. Von einem vorderen Rand des Kunststoffrings 26 stehen Federlaschen 28 schräg nach innen und vom ab. Der Kunststoffring 26 und insbesondere seine Federlaschen 28 zentrieren die Ankerstange 24 in der Ankerhülse 10.

Ein vorderer Bereich 22 der Ankerhülse 10 weist keine Umhüllung auf. Der vordere Bereich 22 schließt sich an das vordere, mit der Kappe 18 verschlossene Ende der Ankerhülse 10 an und reicht im dargestellten und beschriebenen Ausführungsbeispiel der Erfindung über ungefähr die Hälfte der Länge der Ankerhülse 10.

Ungefähr in einer Längsmitte der Ankerhülse 10 weist diese eine Mörtelbremse 32 auf. Die Mörtelbremse 32 ist im dargestellten und beschriebenen Ausführungsbeispiel der Erfindung als umlaufender, nach innen stehender Wulst ausgebildet, von dem Federlaschen 34 schräg nach vom und innen abstehen. Die Mörtelbremse 32 verengt mit ihrem Wulst und den Federlaschen 34 einen Querschnitt der Ankerhülse 10. Außerdem haben die Federlaschen 34 die Funktion, die Ankerstange 24 in der Ankerhülse 10 zu zentrieren.

Verwendung und Funktion der erfindungsgemäßen Ankerhülse 10 werden nachfolgend anhand der in Figur 1 dargestellten Verankerung in einem Lochstein 36 erläutert. Zur Verankerung wird ein zylindrisches Bohrloch 38 durch Stege 40 des Lochsteins 36 gebohrt und die Ankerhülse 10 wird mit ihrem geschlossenen, vorderen Ende 18 voran in das Bohrloch 38 eingesetzt, bis der Kunststoffring 26 an ihrem hinteren Ende an einer Außenfläche des Lochsteins 36 aufsitzt. Anschließend wird Mörtel 16, vorzugsweise ein Kunstharzmörtel, in die Ankerhülse 10 injiziert. Danach wird die Ankerstange 24 in die Ankerhülse 10 eingeführt, wobei die Ankerstange 24 durch die Federzungen 28, 34 des Kunststoffrings 26 und der Mörtelbremse 32 in der Ankerhülse 10 zentriert wird. Die Ankerstange 24 ist beispielsweise ein Gewindestab. Beim Einführen verschiebt die Ankerstange 24 den in die Ankerhülse 10 injizierten Mörtel 16 nach vorn und verdrängt den Mörtel 16 aus der Ankerhülse 10. Beim Injizieren und/oder beim Einführen der Ankerstange 24 tritt der Mörtel 16 durch die die Austrittsöffnungen 14 bildenden Löcher des die Umfangswand der Ankerhülse 10 bildenden Metallsiebs 12 nach außen. Im hinteren Bereich 20 weitet der Mörtel 16 die Umhüllung 22 ballonförmig in eine Hohlkammer 42 des Lochsteins 36 auf und verankert dadurch die Ankerhülse 10 im Lochstein 36. Im vorderen Bereich 30 tritt der Mörtel 16 in eine Hohlkammer 42 des Lochsteins 36 aus und verankert dadurch die Ankerhülse 10 zusätzlich im Lochstein 36. Die Mörtelbremse 32 staut den Mörtel 16 beim Injizieren und beim Einführen der Ankerstange 24 in der Ankerhülse 10, die Mörtelbremse 32 hält einen Teil des Mörtels 16 im hinteren Bereich 20 der Ankerhülse 10 zurück. Dadurch wird erreicht, dass der Mörtel 16 nicht nur im vorderen Bereich 30 der Ankerhülse 10 austritt, sondern auch im hinteren Bereich 20 die Umhüllung 22 ballonförmig aufweitet. Die Verankerung der Ankerhülse 10 im Lochstein 36 ist dadurch verbessert. Des Weiteren bewirkt die Mörtelbremse 32, dass ein Teil des Mörtels 16 im hinteren Bereich 20 der Ankerhülse 10 zurückgehalten wird, so dass die Ankerstange 24 über die gesamte Länge der Ankerhülse 10 in den Mörtel 16 eingebettet ist. Zusätzlich drückt die Umhüllung 22 aufgrund ihrer Elastizität den Mörtel 16 teilweise zurück in die Ankerhülse 10 und bewirkt dadurch eine gute Einbettung der Ankerstange 24 in den Mörtel 16 und eine Verteilung des Mörtels 16 über die gesamte Länge der Ankerhülse 10. Dadurch wird eine Verankerung der Ankerstange 24 über die gesamte Länge der Ankerhülse 10 sowie eine Querabstützung auch im hinteren Bereich und am hinteren Ende der Ankerhülse 10 erreicht. Dadurch werden hohe Verankerungswerte und eine gute Abstützung gegen Querbelastung der Ankerstange 24 erreicht.

Bei einer Verankerung in einem Bohrloch in einem Vollbaustoff, beispielsweise in Beton (nicht dargestellt), bewirkt die erfindungsgemäße Ankerhülse 10 ebenfalls eine Verteilung des Mörtels 16 über die gesamte Länge der Ankerhülse 10 und dadurch eine Verankerung der Ankerhülse 10 im Bohrloch über die gesamte Länge der Ankerhülse und ebenso eine Verankerung der Ankerstange 24 über die gesamte Länge der Ankerhülse 10. Ebenso wird die Querabstützung der Ankerstange 24 am hinteren Ende der Ankerhülse 10 erreicht.

In der nachfolgenden Beschreibung von Figur 2 werden für gleiche Bauteile gleiche Bezugszahlen verwendet. Zur Vermeidung von Wiederholungen sollen im Wesentlichen nur die Unterschiede zu Figur 1 erläutert werden, im Übrigen wird auf die vorstehenden Ausführungen zu Figur 1 verwiesen. Die in Figur 2 dargestellte Ankerhülse 10 weist ebenso wie diejenige aus Figur 1 ein rohrförmiges Metallsieb 12 als Umfangswandung auf und ist am vorderen Ende mit einer Kappe 18 verschlossen. In das hintere Ende der Ankerhülse 10 ist ein Kunststoffring 26 mit L-förmigem Ringquerschnitt und schräg nach vorn und innen abstehenden Federlaschen 28 eingesetzt. Im Unterschied zur Ankerhülse 10 aus Figur 1 ist die elastisch aufweitbare Umhüllung 22 bei der in Figur 2 dargestellten Ankerhülse 10 im vorderen Bereich 30 angeordnet. Die Umhüllung 22 besteht ebenfalls aus einem schlauchförmigen Textilstrumpf und ist an ihren beiden Enden beispielsweise durch Verkleben mit der Ankerhülse 10 verbunden. Im hinteren Bereich 20 weist die Ankerhülse 10 aus Figur 2 keine Umhüllung auf. Eine Mörtelbremse 32 fehlt.

Die Ankerhülse 10 wird in ein Bohrloch 38 in einem Lochstein 36 eingesetzt und es wird Mörtel 16 injiziert. Anschließend wird die Ankerstange 24 in die Ankerhülse 10 eingeführt. Durch das Injizieren des Mörtels 16 und/oder das Einführen der Ankerstange 24 wird Mörtel 16 in der Ankerhülse 10 nach vom verschoben und aus der Ankerhülse 10 nach außen verdrängt. Dabei weitet der Mörtel 16 die elastische Umhüllung 22 im vorderen Bereich 30 in einen Hohlraum 42 des Lochsziegels 36 ballonförmig auf. Die Umhüllung 22 begrenzt die Menge des austretenden Mörtels und die Umhüllung 22 drückt aufgrund ihrer Elastizität den Mörtel 16 teilweise wieder zurück in die Ankerhülse 10. Dadurch wird außer einer guten Einbettung der Ankerstange 24 in den Mörtel 16 erreicht, dass nur ein Teil des Mörtels 16 im vorderen Bereich 30 der Ankerhülse 10 austreten kann. Der übrige Mörtel 16 verteilt sich innerhalb der Ankerhülse 10 und tritt im hinteren Bereich 20 in einen weiteren Hohlraum 42 des Lochziegels 36 aus. Dadurch wird ebenso wie bei der Ankerhülse aus Figur 1 eine Verankerung der Ankerhülse 10 über ihre gesamte Länge und eine Verankerung der Ankerstange 24 ebenfalls über die gesamte Länge der Ankerhülse 10 erreicht. Auch bei in einen Vollbaustoff eingesetzter Ankerhülse 10 bewirkt die im vorderen Bereich 30 angeordnete Umhüllung 22 eine gute Verankerung der Ankerstange 24 im Bohrloch über die gesamte Länge der Ankerhülse 10 und eine Querabstützung der Ankerstange 24 bis zum hinteren Ende der Ankerhülse 10.

Zur Verankerung in einem Vollbaustoff ist die Umhüllung 22 vorzugsweise mörteldurchlässig wie der in den beiden Ausführungsbeispielen verwendete Textilstrumpf, damit sich der Mörtel 16 mit dem Vollbaustoff verbinden kann. Zur Verankerung in einem Hohlbaustoff wie dem dargestellten Lochziegel 36 kann auch eine mörteldichte Umhüllung verwendet werden.

## Patentansprüche

1. Ankerhülse zur Verankerung einer Ankerstange in einem Bohrloch mittels Mörtels, wobei die Ankerhülse eine Vielzahl über ihre Umfangsfläche verteilter Austrittsöffnungen für Mörtel aufweist, **dadurch gekennzeichnet, dass** die Ankerhülse (10) eine Mörtelbremse (32) an einer Innenseite der Ankerhülse (10) in einem in Längsrichtung mittleren Bereich der Ankerhülse (10) aufweist.

2. Ankerhülse nach Anspruch 1, **dadurch gekennzeichnet, dass** die Ankerhülse (10) eine aufweitbare Umhüllung (22) aufweist.

3. Ankerhülse nach Anspruch 2, **dadurch gekennzeichnet, dass** die Umhüllung (22) sich nur über einen Teil einer Länge der Ankerhülse (10) erstreckt.

4. Ankerhülse nach Anspruch 3, **dadurch gekennzeichnet, dass** die Ankerhülse über den restlichen Teil der Länge verteilt Austrittsöffnungen (14) aufweist.

5. Ankerhülse nach Anspruch 3, **dadurch gekennzeichnet, dass** die Umhüllung (22) in einem vorderen Bereich der Ankerhülse (10) angeordnet ist.

6. Ankerhülse nach Anspruch 3, **dadurch gekennzeichnet, dass** die Umhüllung (22) in einem hinteren Bereich der Ankerhülse (10) angeordnet ist.

7. Ankerhülse nach Anspruch 1, **dadurch gekennzeichnet, dass** ein vorderes Ende der Ankerhülse (10) geschlossen ist.

8. Ankerhülse nach Anspruch 2, **dadurch gekennzeichnet, dass** die Umhüllung (22) mörteldurchlässig ist.

9. Ankerhülse nach Anspruch 2, **dadurch gekennzeichnet, dass** die Umhüllung (22) mörteldicht ist.

10. Ankerhülse nach Anspruch 2, **dadurch gekennzeichnet, dass** die Umhüllung (22) elastisch aufweitbar ist.

## Claims

1. Anchoring sleeve for anchoring an anchor rod in a drilled hole by means of mortar, wherein the anchoring sleeve has a plurality of outlet openings for mortar distributed over its peripheral surface, **characterized in that** the anchoring sleeve (10) has a mortar-restraining means (32) on the inside of the anchoring sleeve (10) in a longitudinally central region of the anchoring sleeve (10).

2. Anchoring sleeve according to claim 1, **characterized in that** the anchoring sleeve (10) has an expandable sheath (22).

3. Anchoring sleeve according to claim 2, **characterized in that** the sheath (22) extends only over a portion of the length of the anchoring sleeve (10).

4. Anchoring sleeve according to claim 3, **characterized in that** the anchoring sleeve has outlet openings (14) distributed over the remainder of its length.

5. Anchoring sleeve according to claim 3, **characterized in that** the sheath (22) is arranged in a forward region of the anchoring sleeve (10).

6. Anchoring sleeve according to claim 3, **characterized in that** the sheath (22) is arranged in a rear region of the anchoring sleeve (10).

7. Anchoring sleeve according to claim 1, **characterized in that** the forward end of the anchoring sleeve (10) is closed.

8. Anchoring sleeve according to claim 2, **characterized in that** the sheath (22) is permeable to mortar.

9. Anchoring sleeve according to claim 2, **characterized in that** the sheath (22) is impermeable to mortar.

10. Anchoring sleeve according to claim 2, **characterized in that** the sheath (22) is resiliently expandable.

## Revendications

1. Douille d'ancrage pour l'ancrage d'une barre d'ancrage dans un trou de forage au moyen de mortier, moyennant quoi la douille d'ancrage comporte une multitude d'orifices de sortie pour le mortier, réparties sur sa surface circonférentielle, **caractérisée en ce que** la douille d'ancrage (10) comporte un frein de mortier (32) sur une paroi intérieure de la douille d'ancrage (10) dans une zone médiane dans le sens longitudinal de la douille d'ancrage (10).

2. Douille d'ancrage selon la revendication 1, **caractérisée en ce que** la douille d'ancrage (10) comporte une enveloppe extensible (22).

3. Douille d'ancrage selon la revendication 2, **caractérisée en ce que** l'enveloppe (22) ne recouvre qu'une partie d'une longueur de la douille d'ancrage (10).

4. Douille d'ancrage selon la revendication 3, **caractérisée en ce que** la douille d'ancrage (10) comporte des orifices de sortie (14) répartis sur le reste de la longueur.

5. Douille d'ancrage selon la revendication 3, **caractérisée en ce que** l'enveloppe (22) est disposée dans une zone avant de la douille d'ancrage (10).

6. Douille d'ancrage selon la revendication 3, **caractérisée en ce que** l'enveloppe (22) est disposée dans une zone arrière de la douille d'ancrage (10).

7. Douille d'ancrage selon la revendication 1, **caractérisée en ce qu'**une extrémité avant de la douille d'ancrage (10) est fermée.

8. Douille d'ancrage selon la revendication 2, **caractérisée en ce que** l'enveloppe (22) est perméable au mortier.

9. Douille d'ancrage selon la revendication 2, **caractérisée en ce que** l'enveloppe (22) est étanche au mortier.

10. Douille d'ancrage selon la revendication 2, **caractérisée en ce que** l'enveloppe (22) est élastiquement extensible.
